# EUROPEAN PATENT SPECIFICATION

(11) **EP 3 764 805 B1**
(45) Date of publication and mention of the grant of the patent: **28.08.2024**
(21) Application number: 19718805.5
(22) Date of filing: 13.03.2019
(51) Int. Cl.: A23G 9/22

(54) **SCRAPER BLADE**
ABSTREIFSCHILD
LAME DE GRATTOIR

(30) Priority: 13.03.2018 GB 201803970
(43) Date of publication of application: 20.01.2021
(73) Proprietor: TOOA S.P.A., 60044 Fabriano (AN) (IT)
(72) Inventor: MELDRUM, Alistair John, Ashton Keynes SN6 6PW (GB); COPPOLA, Giovanni, London SW19 7PB (GB)
(74) Representative: Iannone, Carlo Luigi
(86) International application number: PCT/GB2019/050697
(87) International publication number: WO 2019/175575

(56) References cited:
- EP-A1- 2 266 418
- WO-A1-2015/018628
- CN-Y- 2 359 903
- CN-Y- 201 393 518
- DE-A1- 3 003 947
- FR-A1- 2 216 011
- FR-A1- 2 218 133
- KR-A- 20020 035 804
- US-A- 3 914 956
- US-A- 976 684
- US-A1- 2006 062 078
- US-A1- 2018 055 060

## Description

The present invention relates to scraper blades and more particularly but not exclusively to scraper blades that allow for improved performance when preparing single-serve portions of freshly-made frozen and/or chilled confections on demand in a carton or bowl.

Frozen and cold confections include, but are not exclusive to, dairy and non-dairy ice creams, gelato, sorbets, sherbets, mousses, frozen yogurts, and slush beverages. It is desirable to prepare as required portioned frozen or chilled confections utilizing reusable, recyclable and/or disposable single-serve cartons or packaging units. Ideally it should be possible to prepare freshly made portions of frozen/chilled confections on-demand in a shorter period of time and with more overrun (air incorporation) as compared to existing domestically available frozen convections, and especially ice cream makers.

It is well known that to deliver a high-quality ice cream, it is necessary to ensure an optimum ice cream microstructure, including ice crystal size (less than 20µm), fat droplet size (around 1µm) and air cell size (less than 50µm) and distribution. This requires careful consideration of the delivery and production processes.

With industrial ice cream equipment, including those used to prepare ice creams in restaurants & parlours, the blade designs include a scraper and sometimes an internal dasher unit. The scraper designs used in these machines are optimum for these high volume (> 5 litres) ice cream making equipment. Such high-volume designs tend to be helical and/or spiral in shape and design. In addition to the internal dasher unit, which whips air into the ice cream. The majority of these high volume machines also includes an air injection system. Furthermore, industrial ice cream equipment has an horizontally configured (i.e. parallel to the ground) ice cream barrel, which is usually cylindrical in shape. This horizontal barrel configuration helps maximise the gravitational effect on the ice cream making process in terms of mixing and aeration.

Currently available low volume so domestic ice cream makers have specific blade designs optimised specifically for them. Domestic ice cream makers produce quantities of ice cream ranging from 0,5 litres to 2 litres in large scraped container bowls. The design of the blades utilized in these domestic machines means that not only is the speed of ice cream making lengthy (between 15-60mins depending on the make & model) but also the amount of air incorporation (overrun) limited. Furthermore, the removal of the blades in domestic ice cream makers is cumbersome. The ice cream sticks to the blades need to be scraped off and cleaned thoroughly prior to making the next batch of ice cream.

Blade designs for industrial or existing domestic ice cream machines are not suitable for smaller volume (100-300m1), single-serve applications. They are less effective in producing the optimal microstructures necessary for high quality ice cream and in addition, require successive cleaning cycles in-between batches.

FR2218133, FR2216011, CN201393518, US2006/062078, CN2359903 and US976684 disclose examples of blades for preparing a frozen confection.

EP2266418, KR20020035804, US3914956, WO2015/018628, US 2018/055060 and DE3003947 disclose examples of devices suitable for preparing a frozen confection.

In accordance with aspect of the present invention there is provided a blade assembly as described in claim 1 below. Other aspects of the present invention are outlined in the claims which are dependent upon claim 1.

Embodiments of aspects of the present invention will now be described by way of example only with reference to the accompanying drawings in which: -
Fig. 1a & 1b show a scraper blade assembly in accordance with aspects of the present invention in two different side on views;
Fig. 2a & 2b show a side and elevation view respectively of the helical-blade face. The precision blades have a helically angled leading edge and an optimum facial curvature to maximise scraping, mixing and aeration efficiency;
Fig.3 Shows the underside view revealing the helical-blade facial angle and curvature; and,
Fig. 4a & 4b show the blade driver-disc which acts as both the driver of the blade rotation and cleans the scraper blades during removal

The present invention improves upon the prior art by providing a specially designed helical scraper blades with technical specifications that makes it optimum for producing smaller volume portions (100-300ml) single-serve frozen and or/cold confections in less than 200 seconds, whilst at the same time delivering excellent aeration capability and delivering the optimum ice cream microstructure. In addition, the helically designed blades, in conjunction with the rotation of the motor, applies a downward force to the 'liquid state' confection during the ice cream making process, thus further aiding the microstructural development.

The blades are ideally both driven by and cleaned upon removal from the container by a specially designed driver-disc unit. The driver-disc drives the blades rotationally to produce the frozen/cold confection. The blades can also be cleaned by the driver disc upon removal from the ice cream container. This allows for repeated reuse of the blades without significant cross-contamination and thus reduces significantly the need for excessive cleaning in-between confection batches/portions.

The present invention specifically improves upon the current state of the art by:
a) developing a range of specialiazed helical blade designs that can be incorprated into a conical-shaped container system to produce high quality frozen/chilled confections at low volume (100-300ml) for single serve portionable applications
b) developing a unique driver-disc and blade removal system, including the utilisation of a special hydrophobic material, that allows for the blades to be rotated within the container and removed and reused for single-serve portions of frozen/chilled confections without significant cross-contamination & cleaning.

With blade assemblies in accordance with aspects of the present invention there are two blades which have a helical and/or spiral form. Each blade in conjunction with the rotation by a drive motor applies a downward force on a product in the packaging carton or bowl when that product is in a liquid state. The blades have an angle along their length which matches to fit, and ideally provides an interference slip fit, to the angle of the wall of the packaging or bowl. This slip or scrapping fit creates a scraping force on the inner surface of the packaging or bowl. The slip fit or interference slip or scrapping fit ensures contact is made with the inner wall of the packaging constantly during rotation of the paddles.

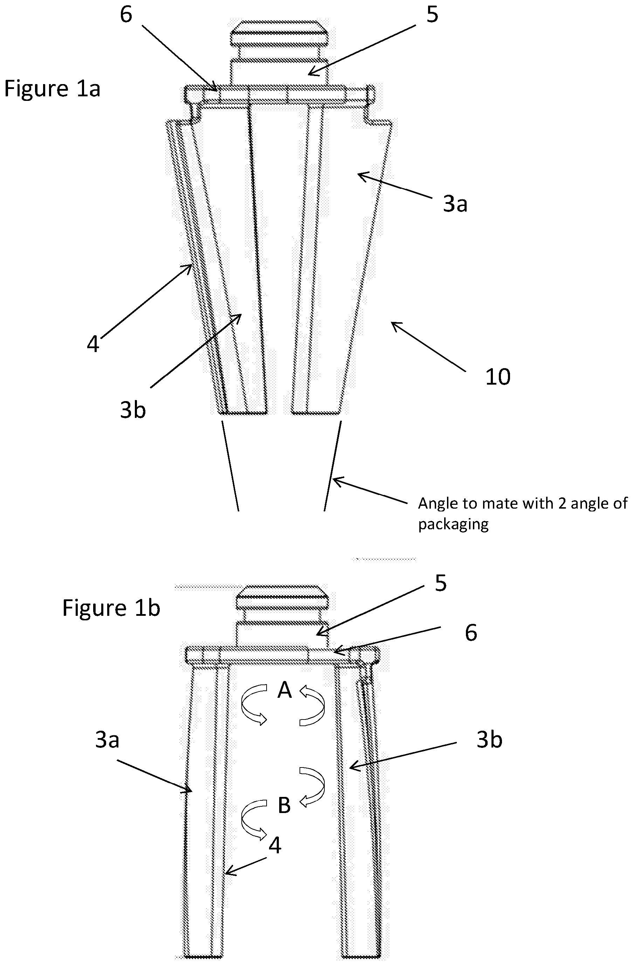

Figure 1 shows a blade assembly 10 in accordance with aspects of the present invention. In this embodiment the blade assembly consists of two opposed blades 1 but the present invention is not limited to two blades. The axial angle 2 of the blades 1 as can be seen is essential for the blades 1 to fit snuggly within a conically shaped container packaging, carton or bowl. Such blade angle 2 will maximising the mixing, scraping and aeration dynamics of the blades 1 upon rotation as described above in the packaging or bowl.

The blades 1, as can be seen by comparing figure 1a and figure 1b, have a curved sweeping helical element 3 whose outer surface 3a as seen in figure 1a spirals into contact with a wall surface of the packaging or bowl whilst an inner surface 3b is shaped to cause inward flow mixing and aeration upon rotation. A leading edge 4 between the surfaces 3a, 3b is a close slip fit if not an interference slip or scrapping fit to the carton packaging or bowl (not shown) to scrape the blade over the wall surface ensuring good churning of the liquid within the packaging carton or bowl.

The mixing, scraping and aeration dynamics due to rotation in the direction of arrowhead A of the blade assembly 10 cause inward churn of the fluid within the assembly between the opposed blades 1. The rotational drive of the blades 1 is through a drive hub 5 which tends to be above the blades 1 in use so that the assembly is generally vertical so utilising gravity to mix and provide aeration of the churned liquid between the blades. In such circumstances the blades 1 project downwardly upon the hub 5 and upon shoulder parts 6. It will be appreciated that normally each blade 1 is generally thinner than the shoulder parts 6 and certainly the hub 5. In such circumstances the blades 1 can flex relative to the hub 5 and possibly have a degree of pivotal rotation about the shoulders 6 so facilitating a degree of bias to pressure engagement with a packaging carton or bowl wall surface for close fit and a scraping/slip interference with such as surface in use. The nature of turning an initially quite fluid ice cream or other confection to a more solid chilled ice cream or sorbet will naturally adjust flex and/or pivot of the opposed blades in order to facilitate chilled confection formation.

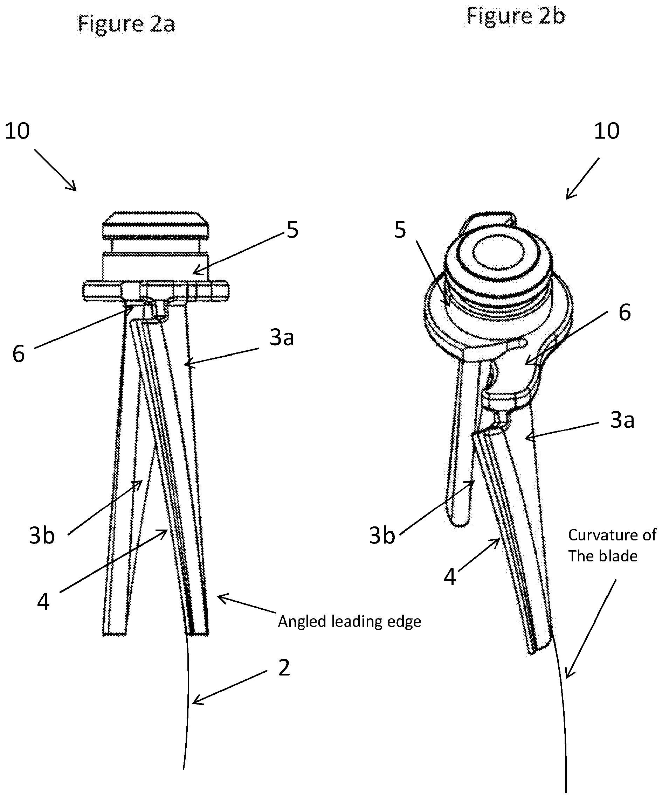

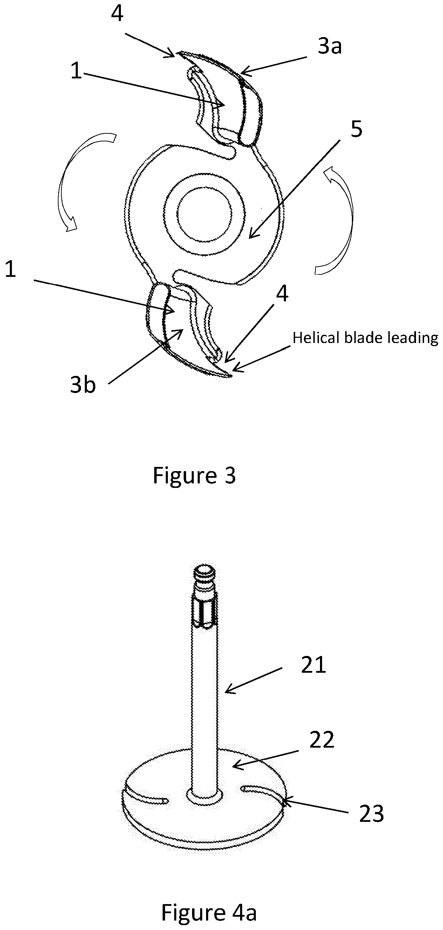

Figure 2 and figure 3 show the helical nature of the blades 1 to maximise the scraping with a precision-angled leading edge 4, and a curvature of the blades 1 to maximise mixing and aeration. In addition, the helical design and curvature of the blade face 3b increases the downward force during rotation thus ensuring the efficiency of ice cream making process in terms of speed and aeration.

The angle of inclination and extent of the part helical spiral of each blade will be dependent upon each embodiment to correspond with respective conical packaging or bowls. Similarly, the length of each blade will depend upon the depth of the conical packaging or bowl shape.

As indicated above industrial high-volume confection apparatus is generally horizontal and has a cylindrical barrels so that the confection such as ice cream can be dispensed at one end as required. With lower volume domestic ice cream and similar confection machines by necessity smaller amounts of confection are made in each batch and so removable packaging or bowls will be used as required. Such packaging or bowls in the form of tubs or cartons are advantageously cone shaped to allow a stacking of the cone blanks prior to use and so the necessary mixing and aeration can be performed - a cone allows the confection such as ice cream to be mixed by urging along the cone as well as across the cone shape. However, such a cone shape presents problems with regard to scraping the side wall of the 'confection forming' packaging or bowl and with regard to convenient removal of the stirring device used to form the confection (ice cream). The present invention uses opposed blades as described to ensure both a close to interference scrape fit with the walls of the packaging or bowl so ensuring all initially fluid components of the confection are swept and scrapped into the mixing, churning and aeration process as the blades are turn. The helical shaping also means that the blades can be relatively easily removed from the formed confection such as ice cream by a simple twisting action. This twisting action in combination with a slotted disc can also effectively clean the blades as described below.

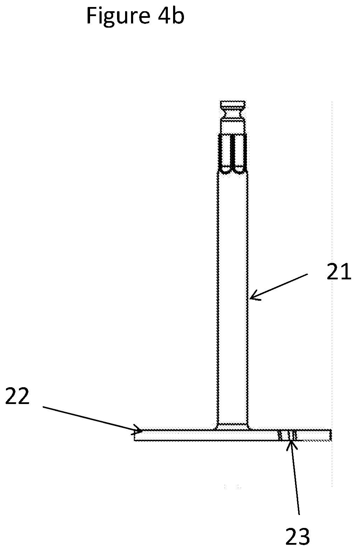

Figure 4 shows a driver disc 22 that is connected to a powered drive shaft 21, typically through an electric motor (not shown), that can deliver controlled rotation and axial positioning of the helical-blades of a blade assembly in accordance with aspects of the present invention. The disc 22 has curved slots 23 within the driver disc 22 where the helical-blades (not shown) of an blade assembly in accordance with aspects of the present invention are inserted prior to ice cream making and through which these blades are removed after ice cream making. The driver disc 22 rotates the blades inside the container packaging or bowl at the necessary rotational speed. Once the ice cream is made, the helical blades are retracted and out of the packaging through a 'helical' twisting motion.

Ideally, the material used for the blades 1 and driver disc 22 are hydrophobic in nature. Thus, as the blades 1 are retracted out of a container, the curved slots 23 literally 'scrape' the frozen/cold confection (in this example, ice cream) off the blades 1. In this way the blades 1 remain free of ice cream contamination and can be re-used for the next batch/portion of ice cream without the need for specific if any cleaning.

Blades in accordance with aspects of the present invention are helical with typically a 15 degrees angled face and are curved in section with a sharp leading edge but the angle could be between 5 degrees and 45 degrees. The length of the blades is typically around 66.5mm but could be between 50mm and 100mm.The blades are angled to match the packaging carton use so with an angle of 4 degrees per side (8 degrees overall) this could be between 2 degrees per side and 10 degrees per side. The packing angle of the helix in conjunction with the direction of rotation is such that a liquid (confection ingredients) is naturally forced down into the packaging carton in a chamber as a result of the helical face of the blade acting in the same way as an auger. The abutment force is created by an interference fit between the scraper blade and the wall of the packaging carton within the chamber. Slots in the bridge between the two helical paddles allow for flex in the paddle material. It is this compression of the material that holds the scraper blades against the wall of the chamber.

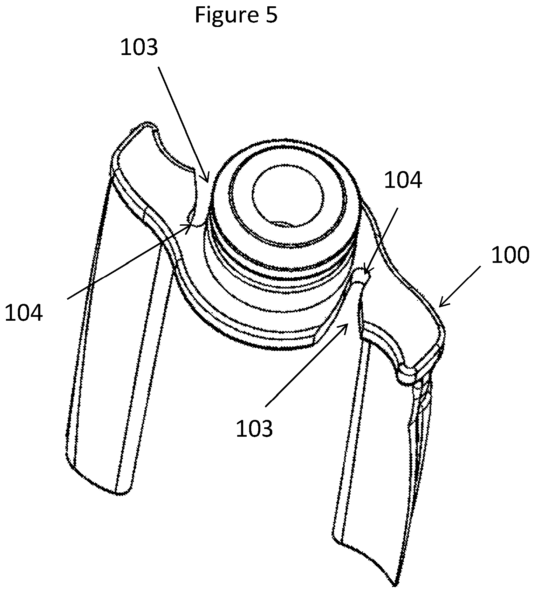

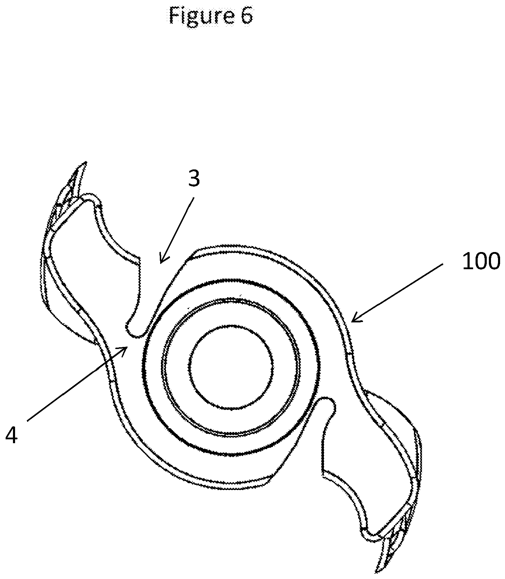

The blades can be paddles without slots and so no flex but slots in the blades might be provided for mixing or flexibility if required. Figure 5 and figure 6 illustrate alternative blade paddles 100 in plan with slots 103 and notches 104 added as required to alter flexibility and so response of the blades associated with them in use.

Force of the paddles to the packaging wall would be controlled by the natural spring of the material. The force desired might vary but can be chosen dependent upon material type, thickness/cross-section along with structural features such as slots or notches as described above. Excessive force should that occur would be controlled by torque sensing on the drive motor which would shut the machine down and prevent damage to the components.

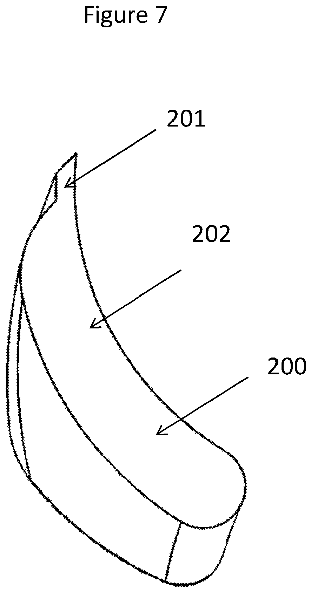

Figure 7 illustrates a perspective view of a blade 200 cross-section. As can be seen the blade 200 has a sharp scraping edge 201 which curves back in the helical fashion as described above into main body part 202. The edge 201 is tapered but robustly presented upon the body part 202 for controlled positioning and presentation of the blade 200 in rotation during use. The helical spiral curve will drive and force liquid to chilled confection movement in the packaging carton during making.

## Claims

1. A blade assembly (10) for preparing single-serve portions of freshly-made frozen and/or chilled confections on demand, the assembly (10) comprising a drive hub (5), a shoulder (6) and opposed separated helical blades (1) presented upon said drive hub (5), each blade (1) being formed of a material with a predetermined natural spring with at least part of a helix shape, whereby in use the blade (1) is adopted to flex under its natural spring upon the drive hub (5) and/or to pivot upon said shoulder (6) between the blade (1) and hub (5) to provide an outward bias in the blade (1) when the helical blade is forced against a wall surface of a conical container, the bias relative to a centre of the drive hub (5) and the other opposed helical blade (5) for close fit engagement with the conical container surface and **characterized in that** whereby in use the blades (1) when rotated upon the drive hub have an outer surface (3a) adapted to scrape the container surface and each blade (1) has an inner surface (3b) shaped to urge motion inward towards a centre of the conical container consistent with the axis of rotation of the hub, wherein the blades fit snugly inside and across said conical container.

2. An assembly (10) according to claim 1 wherein in use the blades scrape and urge motion of a frozen and/or cold confections such as dairy and non-dairy ice creams, gelato, sorbets, sherbets, mousses, frozen yogurts, and slush beverages.

3. An assembly (10) according to claim 1 wherein the container or bowl is a 100 to 300 ml volume containers.

4. An assembly (10) according to claim 2 wherein the assembly (10) act to produce the confection such as ice cream between -5 to -l0°C in less than 180 seconds of rotation of the assembly with the confection starting from an ambient or chilled temperature.

5. An assembly (10) as claimed in any preceding claim wherein the assembly is made from hydrophobic material for self-cleaning of each blade in use.

6. An assembly (10) as claimed in any preceding claim wherein the assembly includes a driver disc (22) with cut-out curved slots (23) where the blades (1) can be both inserted into and retracted out of.

7. An assembly (10) according to claim 6 wherein the driver disc (22) is connected to a rotational unit for drive, in use of the helical blades (1) without permanent attachment of the blades (1) to the rotational unit.

8. An assembly (10) as claimed in claim 6 or claim 7 wherein the curved slots (23) are configured to'scrape' the blades (1) to remove in use a frozen/cold confection such as ice cream off each blade (1) when the blades (1) are retracted out of the container in which the frozen/chilled confection has been prepared.

9. An assembly as claimed in any of claims 6 to 8 wherein the driver disc (22) is made from hydrophobic material for self-cleaning in use.

## Patentansprüche

1. Messeranordnung (10) zum Zubereiten von Einzelportionen von frisch gemachten tiefgefrorenen und/oder gekühlten Süßwaren auf Anfrage, wobei die Anordnung (10) eine Antriebsnabe (5), eine Schulter (6) und gegenüberliegende, getrennte, schraubenförmige Messer (1) umfasst, die auf der Antriebsnabe (5) angeordnet sind, wobei jedes Messer (1) aus einem Material mit einer vorbestimmten natürlichen Elastizität mit mindestens einem Teil einer Schraubengestalt besteht, wobei das Messer (1) sich im Gebrauch unter seiner natürlichen Elastizität auf der Antriebsnabe (5) biegt und/oder auf der Schulter (6) zwischen dem Messer (1) und der Nabe (5) schwenkt, um eine nach außen gerichtete Neigung in dem Messer (1) zu erreichen, wenn das schraubenförmige Messer gegen eine Wandfläche eines konischen Behälters gedrückt wird, die Neigung relativ zu einer Mitte der Antriebsnabe (5) und dem anderen gegenüberliegenden schraubenförmigen Messer (5) für einen eng anpassenden Eingriff mit der konischen Behälteroberfläche und **dadurch gekennzeichnet, dass** die Messer (1), wenn sie auf der Antriebsnabe gedreht werden, eine äußere Oberfläche (3a) aufweisen, die eingerichtet ist, die Behälteroberfläche abzuschaben, und jedes Messer (1) eine innere Oberfläche (3b) aufweist, die geformt ist, um eine Bewegung nach innen zu einer Mitte des konischen Behälters in Übereinstimmung mit der Drehachse der Nabe zu ersuchen, wobei die Messer sich eng in und über den konischen Behälter anpassen.

2. Anordnung (10) nach Anspruch 1, wobei die Messer im Gebrauch abschaben und die Bewegung einer gefrorenen und/oder kalten Süßware wie Milch- und Nicht-Milch-Eis, Eis, Sorbett, Sherbet, Mousse, gefrorene Joghurts und Erfrischungsgetränke ersuchen.

3. Anordnung (10) nach Anspruch 1, wobei der Behälter oder der Teller ein Behälter ist, der ein Volumen von 100 bis 300 ml aufweist.

4. Anordnung (10) nach Anspruch 2, wobei die Anordnung (10) so wirkt, um eine Süßware, wie z.B. Eis, zwischen -5 und -10°C in weniger als 180 Sekunden Rotation der Anordnung mit der Süßware ausgehend von einer Umgebungs- oder Kühltemperatur herzustellen.

5. Anordnung (10) nach einem der vorhergehenden Ansprüche, wobei die Anordnung aus hydrophobem Material zur Selbstreinigung jedes Messer im Gebrauch besteht.

6. Anordnung (10) nach einem der vorhergehenden Ansprüche, wobei die Anordnung eine Mitnehmerscheibe (22) mit ausgeschnittenen, gekrümmten Schlitzen (23) aufweist, in die die Messer (1) sowohl eingesetzt werden können als auch aus denen sie herausgezogen werden können.

7. Anordnung (10) nach Anspruch 6, wobei die Mitnehmerscheibe (22) mit einer Rotationseinheit zum Antrieb im Gebrauch der schraubenförmigen Messer (1) ohne eine dauerhafte Befestigung der Messer (1) an der Rotationseinheit verbunden ist.

8. Anordnung (10) nach Anspruch 6 oder 7, wobei die gekrümmten Schlitze (23) so konfiguriert sind, dass sie die Messer (1) "abschaben", um eine gefrorene/kalte Süßware, wie z. B. Eis, im Gebrauch von jedem Messer (1) zu entfernen, wenn die Messer (1) aus dem Behälter zurückgezogen werden, in dem die gefrorene/gekühlte Süßware zubereitet wurde.

9. Anordnung nach einem der Ansprüche 6 bis 8, wobei die Mitnehmerscheibe (22) aus hydrophobem Material zur Selbstreinigung im Gebrauch besteht.

## Revendications

1. Ensemble de lames (10) pour la préparation de portions individuelles de confiseries fraîches congelées et/ou réfrigérées sur demande, l'ensemble (10) comprenant un moyeu d'entraînement (5), un épaulement (6) et des lames hélicoïdales opposées et séparées (1) présentées sur ledit moyeu d'entraînement (5), chaque lame (1) étant formée d'un matériau ayant un ressort naturel prédéterminé avec au moins une partie d'une forme d'hélice, grâce à quoi en utilisation, la lame (1) est conçue pour fléchir sous l'effet de son ressort naturel sur le moyeu d'entraînement (5) et/ou pour pivoter sur ledit épaulement (6) entre la lame (1) et le moyeu (5) afin de fournir un biais vers l'extérieur à la lame (1) lorsque la lame hélicoïdale est poussée contre la surface d'une paroi d'un récipient conique, le biais par rapport à un centre du moyeu d'entraînement (5) et l'autre lame hélicoïdale opposée (5) pour un engagement serré avec la surface du récipient conique et **caractérisé en ce que**, en utilisation, les lames (1), lorsqu'elles tournent sur le moyeu d'entraînement, ont une surface extérieure (3a) conçue pour racler la surface du récipient et chaque lame (1) a une surface intérieure (3b) façonnée pour pousser un déplacement vers l'intérieur vers un centre du récipient conique cohérent avec l'axe de rotation du moyeu, dans lequel les lames s'emboîtent parfaitement à l'intérieur et à travers ledit récipient conique.

2. Ensemble (10) selon la revendication 1, dans lequel, en utilisation, les lames raclent et poussent un déplacement de confiseries congelées et/ou froides telles que des glaces à la crème ou pas à la crème, des glaces italiennes, des sorbets, des granités, des mousses, des yaourts glacés, et des barbotines.

3. Ensemble (10) selon la revendication 1, dans lequel le récipient ou le bol est un récipient d'un volume de 100 à 300 ml.

4. Ensemble (10) selon la revendication 2, dans lequel l'ensemble (10) agit pour produire la confiserie telle que de la glace entre -5 et -10 °C en moins de 180 secondes de rotation de l'ensemble, la confiserie partant d'une température ambiante ou réfrigérée.

5. Ensemble (10) selon l'une des revendications précédentes, dans lequel l'ensemble est constitué d'un matériau hydrophobe pour l'autonettoyage de chaque lame en utilisation.

6. Ensemble (10) selon l'une des revendications précédentes, dans lequel l'ensemble comprend un disque d'entraînement (22) avec des fentes incurvées découpées (23) dans lesquelles les lames (1) peuvent être à la fois insérées et rétractées.

7. Ensemble (10) selon la revendication 6, dans lequel le disque d'entraînement (22) est relié à une unité de rotation pour l'entraînement, en utilisation, des lames hélicoïdales (1) sans fixation permanente des lames (1) à l'unité de rotation.

8. Ensemble (10) selon la revendication 6 ou la revendication 7, dans lequel les fentes incurvées (23) sont configurées pour "racler" les lames (1) afin d'enlever, en utilisation, une confiserie congelée/froide telle que de la glace de chaque lame (1) lorsque les lames (1) sont rétractées hors du récipient dans lequel la confiserie congelée/froide a été préparée.

9. Ensemble selon l'une des revendications 6 à 8, dans lequel le disque d'entraînement (22) est fait d'un matériau hydrophobe pour s'autonettoyer en utilisation.
